# EUROPEAN PATENT APPLICATION

(11) **EP 4 699 440 A1**
(43) Date of publication of application: **25.02.2026**
(21) Application number: 24195085.6
(22) Date of filing: 19.08.2024
(51) Int. Cl.: A01M 1/20, A01M 3/00

(54) **A DEVICE FOR EXTERMINATING TICKS AND A METHOD FOR USING THE DEVICE**

(71) Applicant: Kehäposti Ky, 02360 Espoo (FI)
(72) Inventor: Kutila, Reima, 02360 Espoo (FI)
(74) Representative: Koivisto, Harri Kristian

(57) **Abstract**

A portable, handheld device utilizes heated air to exterminate ticks. The device includes a heating element (11), a fan (13), and a temperature control unit (14) to ensure the air reaches a temperature sufficient to kill ticks.

## Description

### BACKGROUND

The present disclosure relates to a device designed for exterminating ticks through the use of heated air. The heated air has been shown to either eradicate or significantly reduce the population of ticks in a given area by applying air heated to a temperature sufficient to kill them.

Ticks are a widespread problem affecting humans and animals, posing health risks due to their ability to transmit diseases. Traditional methods of tick extermination often involve chemical treatments, which may have adverse environmental and health effects. Therefore, there is a need for an effective, non-chemical method to exterminate or reduce the population of ticks.

Ticks are often encountered in damp and forested areas with dense undergrowth. Ticks go through three distinct stages of development: from larvae to nymph and then to adult. At each stage, they need blood to develop. Ticks may wait for suitable hosts at grass level, at 10...30 centimetres above the ground, adult ticks even higher. Typical host animals are mice and moles, or larger mammals, such as dogs, deer, moose, or humans, which are particularly sought out by adult ticks. Ticks have no eyes, instead they sense the environment with special organs sensing carbon dioxide, smells, heat, and motion.

Ticks are known to carry a wide array of pathogens and cause severe diseases, such as Lyme disease. Humans or domestic animals may get an infection from ticks by roaming on terrain having a suitable environment for ticks. Climate change has enabled ticks to spread to wider areas. Insecticides are not a practical option for removing ticks, as they also affect insects beneficial to the economy of nature.

Studies have shown that ticks are highly sensitive to temperature changes. In particular, temperatures exceeding 60 degrees Celsius have a detrimental effect on ticks. When exposed to such high temperatures, ticks experience thermal stress that disrupts their physiological processes. The proteins and enzymes essential for their survival and function begin to denature and lose their activity, leading to cellular damage. Additionally, the tick's cuticle, which serves as its protective outer layer, can become compromised under extreme heat, resulting in dehydration and loss of bodily fluids.

Exposure to temperatures above 60°C for a brief sustained period leads to the mortality of ticks. This thermal exposure causes irreversible damage to their internal and external structures, rendering them unable to feed, reproduce, or survive. The lethality of such high temperatures makes heat a viable method for exterminating ticks without the need for chemical agents.

### SUMMARY

This summary is provided to introduce a simplified description of the selection of concepts, which are further specified below in the detailed description. This summary is not intended to identify key or essential features of the claimed subject matter, nor is it intended to limit the scope of the claimed subject matter. Furthermore, the claimed subject matter is not limited to implementations that solve any or all disadvantages noted in any part of this disclosure.

A method and device for exterminating ticks is disclosed hereinafter. A portable, handheld device utilizes heated air to exterminate ticks. The device includes a heating element, a fan, and a temperature control unit to ensure the air reaches a temperature sufficient to kill ticks. The term "exterminate" as used herein refers to the ability of the device to either completely eradicate or significantly reduce the population of ticks, depending on the application and conditions.

Using the device systematically may significantly reduce the risk of catching a dangerous disease from a tick bite in predefined areas, such as yards or parks.

The device is safe for the environment, humans and domestic animals as pesticides are not required for tick extermination. The present invention leverages this understanding of ticks' thermal sensitivity by providing a device that uses heated air to exterminate ticks. By directing air heated to a temperature that exceeds the threshold for tick survival, the device effectively reduces or eliminates tick populations in infested areas. This method offers an environmentally friendly and safe alternative to chemical treatments, addressing the need for effective tick control while minimizing health risks and environmental impact.

Many of the attendant features will be more readily appreciated as they become better understood by reference to the following detailed description considered in connection with the accompanying drawings. The embodiments described below are not limited to implementations which solve any or all the disadvantages of known tick collecting devices or methods for operating the same.

### BRIEF DESCRIPTION OF THE DRAWINGS

The present description will be better understood from the following detailed description read in light of the accompanying drawings, wherein
FIG. 1 illustrates schematically an example of one embodiment of a device for exterminating ticks;
FIG. 2 illustrates schematically another example of one embodiment of a device for exterminating ticks; and
FIG. 3 illustrates a flowchart showing one aspect of a method for using the device for exterminating ticks.

Like reference numerals are used to designate like parts in the accompanying drawings.

### DETAILED DESCRIPTION

The detailed description provided below, to be understood in connection with the appended drawings, is intended as a description of the present examples. It is not intended to represent the only forms in which the present example can be constructed or utilized. However, the same or equivalent functions may be achieved by means of different examples.

A device according to this disclosure utilizes hot air to kill ticks from an area infested with ticks. Said area is outdoors, such as gardens or yards having grass or other undergrowth. Families of ticks include Ixodidae (hard ticks) and Argasidae (soft ticks). Of the 700 species of hard ticks and 200 species of soft ticks found throughout the world, at the moment only a few are known to bite and transmit diseases to humans or domestic animals. Hard ticks and soft ticks have different life cycles, growing larger and changing their appearance at each stage. Examples of disease-spreading tick species are European Wood Ticks, Taiga Ticks, American Dog Ticks, Blacklegged Ticks, Brown Dog Ticks, Lone Star Ticks, Rocky Mountain Wood Ticks.

Hot air is known to kill ticks. Exposure of about 60 °C to 70 °C for the period of 2 to 3 seconds kills adult ticks. Larvae and nymphs may die at lower temperatures and/or faster than adult ticks. Adult female ticks can withstand heat the best.

Alternatively, or in addition, the device may be used to exterminate aphids and/or snails from the garden. The brief hot air impact from the device will not harm most plants, affecting only the harmful insects without dangerous pesticides.

The device is configured to blow hot air to the area infested with ticks. The device is hand-held and portable, allowing the hot air to reach into complex undergrowth as the hot air may be targeted to the area from multiple directions. The device has the best effect during damp cloudy days, when the ticks are seeking for the target. Ticks wait at the top of the grass, ready to grab a passing animal or person. During the hot sunny days ticks may retreat to cool places underground.

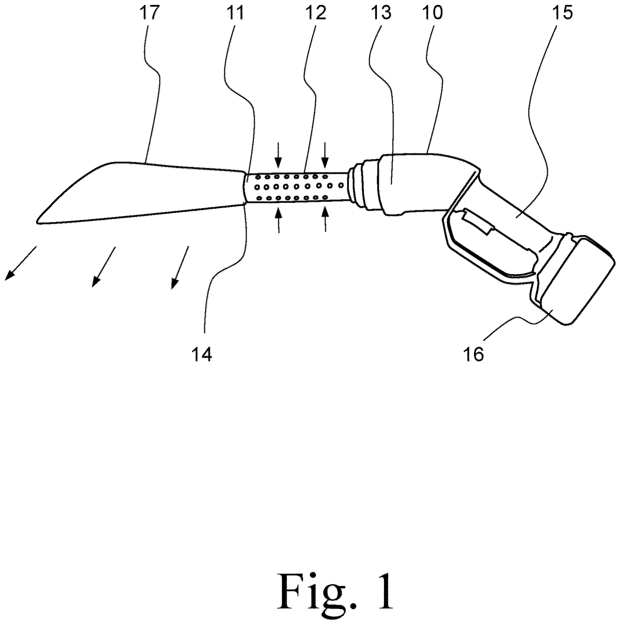

FIG. 1 illustrates schematically an example of one embodiment of the device for exterminating ticks. In this context "exterminating" refers to completely eradicate or at least reduce the tick population inside a limited area. The limited area is the area that the device has processed.

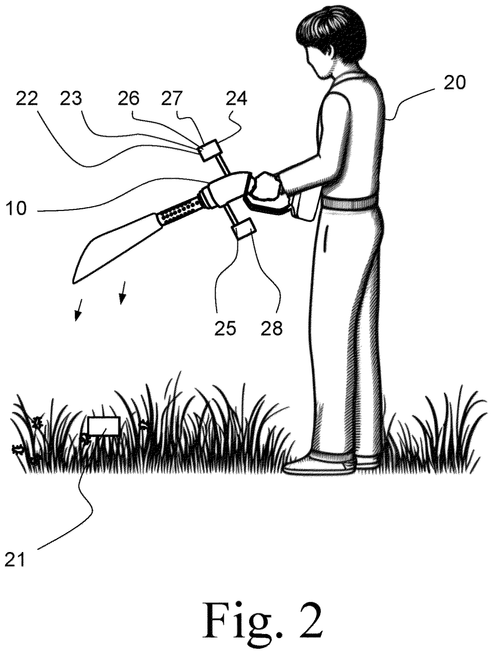

The device is arranged inside a housing 10 that is hand-held and portable, comprising a handle 15 for the user 20, or similar carry-on support. In one embodiment, the device is arranged to be used with one hand. In one embodiment, the device is arranged to be used with both hands. In one embodiment, the device comprises at least one portion arranged as a backpack, for example to be used in applications requiring increased heating capacity. The backpack portion may comprise a power source, heater, or a blower motor. The user 20, illustrated in FIG. 2, directs the hot air to the grass, bush or undergrowth that is suspected of having ticks.

The device comprises a heating element 11 configured to generate heated air. In one embodiment, the heating element 11 comprises an electric resistance heater positioned at the distal position of a nozzle 12. The nozzle 12 may comprise openings to allow air to enter the nozzle 12. In one embodiment, the heating element 11 comprises a butane torch positioned in the nozzle 12 The heating element 11 is configured to provide controlled temperatures to the hot air exiting the device, or in one embodiment, the hot air reaching the target area.

A fan 13 is operatively connected to the heating element 11 for directing the heated air towards the area infested with ticks. The fan 13 resides in the present example in the housing 10, blowing air through the nozzle 12. The openings of the nozzle 12 may introduce additional airflow into the heating element 11. When heated air is blown from a distance, the primary stream of air induces the surrounding air entering via the openings to move along with it. This effect increases the overall airflow and the volume of air being directed at the target area. The flow of air exiting the device has evenly mixed temperature. As a result, the heated air can cover a larger area more effectively, ensuring that more ticks are exposed to the lethal temperature. Moreover, the increased airflow generated by blowing from a distance can help in dispersing the heat more evenly across the targeted area, preventing hotspots and ensuring a more uniform temperature distribution. This uniformity is essential for maximizing the extermination effect, as it ensures that all ticks within the treated area are subjected to the necessary thermal conditions for a sufficient period.

The nozzle 12 is in one embodiment connected to a diffuser 17. The diffuser 17 is configured to spread the air flow to wider area, ensuring uniform processing of the target vegetation. The diffuser 17 further mixes the air flow coming from the nozzle 12 to improve even distribution of hot air in the target area.

Alternatively, the nozzle 12 may be connected to a concentrator that focuses the air flow to smaller area. Diffusers 17, concentrators, or other air flow modifiers may be detachably attached to the nozzle 12.

FIG. 2 illustrates schematically an example of one embodiment of the device. The device according to FIG. 2 comprises multiple accessories, which can be used to assist the operation. It is understood that the device according to this disclosure may comprise all the accessories or a selection of the accessories. The illustration does not limit the form factor of the accessories, as they may be implemented in various ways.

A temperature control unit 14 is configured to regulate the temperature of the heated air. The temperature control unit 14 comprises as one component a thermostat controlling the internal temperatures of the device and protecting it from overheating. In one embodiment, the device comprises means for detecting the temperature of the target area, undergrowth, grass, or plants. In one embodiment, the temperature control unit 14 comprises a wireless temperature sensor 21 that is connected to the device by a wireless transceiver. The wireless connection is established by Bluetooth, or alternatively, by any near field communication technology suitable for connection distances between 50 cm and 5 metres. The wireless temperature sensor 21 provides a feedback loop for the temperature control unit 14, causing the device to increase the hot air temperature if the wireless temperature sensor 21 residing in the target area indicates that the received air flow is too cool. The feedback loop improves the device achieving the air flow and maintaining the heated air at a predetermined threshold temperature sufficient to exterminate the ticks. In one example, the predetermined threshold temperature ranges between 60°C and 70°C. In one example, the predetermined threshold temperature ranges between 60°C and 80°C. In one example, the predetermined threshold temperature ranges between 65°C and 75°C. In one embodiment, the device comprises stepless temperature adjustment, adjustments by small digital increments or an adjustment implemented with discrete electronics components.

In one embodiment, the temperature control unit 14 prevents the device from blowing too hot air, which could cause the device burning and killing the vegetation in the target area. In one embodiment, the wireless temperature sensor 21 is a stand-alone device providing the feedback of the temperature to the user 20.

In one embodiment, the device functions as a convection heater that heats the air flow and blows the heated air into the target area. The sun may provide ambient temperature to the target area, wherein the target area absorbs thermal radiation from the sun rays. The wireless temperature sensor 21 detects the temperature difference between the thermal radiation and the convection heat received from the device. The wireless temperature sensor 21 may send to the device the temperature difference, the detected temperature or both measurements. In an already hot environment, the air flow will distribute the heat within the vegetation, having the effect of increased temperature to spread into shaded areas where the ticks might have escaped from the direct sun light.

In one embodiment, the device comprises a control system having one or more processors which may be microprocessors, controllers, or any other suitable type of processors for processing computer-executable instructions to control the operation of the device. The processor may control one or more sensors, receive, or send data such as sensor data or user interface data, and utilize the data. The control system may be positioned at least partially on a host system and connected to the device, for example a smartphone application connected to the device for controlling the areas, providing positioning information, controlling air flow and/or temperature, and providing at least part of the user interface. The device may comprise a memory configured to store the computer program executable by the processor to provide the functions described herein. The device comprises a user interface for controlling the functionality of the device. The user interface may comprise physical buttons, sliders, rollers, signal lights, touch interface or an extended user interface operating with the smartphone.

In one embodiment, the device comprises an infrared thermometer 22 configured to measure temperature of the area infested with ticks. The infrared thermometer 22 is configured to provide feedback for temperature regulation, for the temperature control unit 14. The infrared thermometer 22 is a thermometer which infers temperature from a portion of the thermal radiation emitted by the target area. In one embodiment, the infrared thermometer 22 is attached to outer perimeter of the housing 10. In one embodiment, the infrared thermometer 22 is attached to outer perimeter by an extension arm. The lateral distance between the nozzle 12, exit of the hot air, and the line of sight of the infrared thermometer 22 improves the readings as the hot air itself does not confuse the measurement. In one embodiment, the infrared thermometer 22 is targeted slightly offset to the target of the hot air, providing the reading of the target after the influence of hot air has passed the target area. In one embodiment, the infrared thermometer 22 comprises a measurement laser to assist aiming the measurement. In one embodiment, the device comprises a target laser to illustrate the focus of the hot air flow.

In one exemplary embodiment, the device comprises a thermal camera 23 calibrated to operate on the predetermined threshold temperature ranges. In one embodiment, the device comprises a screen 24 allowing the user 20 to visualize to how the hot air processing is advancing among the vegetation. In one embodiment, the device comprises an interface to send the output of the thermal camera 23 to external display. In one embodiment, the readings of the thermal camera are provided as feedback for the temperature control unit 14 to improve the temperature regulation.

In one embodiment, the device comprises a timer function 25 configured to indicate a period of time the device is operating in a single position or near the original position. In one embodiment, the device comprises at least one accelerometer 26 to detect the orientation of the device or possible movements that show changes in the position of target or the air flow. As the hot air would need multiple seconds to exterminate the ticks, accelerometer 26 would encourage the user 20 for moving the device slowly. The device comprises a feedback device 27, such as a signal light, a speaker, a buzzer, or a haptic feedback device to assist the user 20 in proper operation.

In one embodiment, the device comprises a power source, wherein the power source is a rechargeable battery 16. In one embodiment, the device is connected to mains power source. The battery operation improves the manoeuvrability of the device. Examples of the rechargeable battery 16 are commonly used tool batteries, such as 18 V, 20 V, 36 V, 40 V, 54 V or 80 V batteries.

In one embodiment, the device comprises a marking spray 28 for marking the area to be processed. The marking spray 28 is in one example a marking foam that is biodegradable, safe to use and configured to disappear soon after use. The user 20 may use the marking spray 28 to mark segments of the yard or any other way to ensure that each spot of the yard or garden is treated properly. In one embodiment, the device applies the marking spray 28 automatically after predetermined period of time. In one embodiment, the marking spray 28 is integrated into the housing 10. In one embodiment, the marking spray 28 is detachable from the housing 10, enabling the user 20 to apply the marking spray 28 separately. In one embodiment, the marking spray 28 is separate from the housing 10.

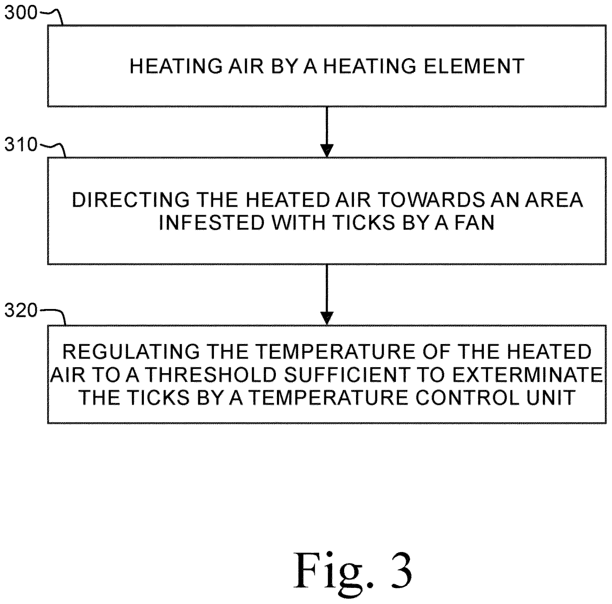

FIG. 3 illustrates a flowchart showing one aspect of a method for using the device for exterminating ticks. Step 300 comprises heating air by a heating element 11. Step 310 comprises directing the heated air towards an area infested with ticks by the fan 13 operatively connected to the heating element 11. Step 320 comprises regulating the temperature of the heated air to a threshold temperature sufficient to exterminate the ticks by a temperature control unit 14. In one use scenario, the nozzle 12 is configured to blow air, the air having the temperature range between 60 °C to 70 °C at the distance of 40...50 cm from the diffuser 17. In one embodiment, the temperature control unit 14 is configured to adjust the temperature, at the vegetation level, to kill the ticks while not harming the vegetation.

The diffuser 17 may help focusing the air flow downward. The user 20 may walk slowly when using the device, pointing the device to the ground. The device may be waved from side to side. Periodically, the processed area may be marked with the marking spray 28. The extermination process may be repeated after 1 - 2-month period to ensure that new ticks will not roam to the area or travel with animals. At all times, certain number of ticks reside underground, being able to avoid the extermination process. Ticks that have fed on blood hide for 6 months to 1 year until they undergo metamorphosis, at which point they need new blood again.

A device for exterminating ticks is disclosed herein. The device comprises a heating element configured to generate heated air; a fan operatively connected to the heating element for directing the heated air towards an area infested with ticks; and a temperature control unit for regulating the temperature of the heated air to a threshold temperature sufficient to exterminate the ticks. The device further comprises a housing encompassing the heating element, fan, and temperature control unit, wherein the housing is portable and handheld. In one embodiment, the heating element comprises an electric resistance heater. In one embodiment, the heating element comprises a butane heater. In one embodiment, the temperature control unit includes a wireless temperature sensor for maintaining the heated air at a predetermined threshold temperature. In one embodiment, the predetermined threshold temperature ranges between 60°C and 70°C. In one embodiment, the device comprises a power source, wherein the power source is a rechargeable battery. In one embodiment, the device comprises a timer function configured to indicate a period of time the device is operating in a single position or near the original position. In one embodiment, the device comprises an infrared thermometer configured to measure temperature of the area infested with ticks and to provide feedback for temperature regulation. In one embodiment, the device comprises a thermal camera configured to measure temperature of the area infested with ticks and to provide feedback for temperature regulation. In one embodiment, the device comprises a marking spray connected to the housing, for marking said area.

Alternatively, or in addition, a method for using a device for exterminating ticks is disclosed herein. The method comprises heating air by a heating element; directing the heated air towards an area infested with ticks by a fan operatively connected to the heating element; and regulating the temperature of the heated air to a threshold temperature sufficient to exterminate the ticks by a temperature control unit for, wherein the device comprises a housing encompassing the heating element, fan, and temperature control unit, and wherein the housing is portable and handheld. In one embodiment, the predetermined threshold temperature ranges between 60°C and 70°C. In one embodiment, the method comprises measuring temperature of the area infested with ticks by a wireless temperature sensor for maintaining the heated air above a predetermined threshold temperature. In one embodiment, the method comprises measuring temperature of the area infested with ticks and providing feedback for temperature regulation by an infrared thermometer or a thermal camera. In one embodiment, the method comprises marking said area by a marking spray connected to the device.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all the stated problems or those that have any or all of the stated benefits and advantages. It will further be understood that reference to 'an' item refers to one or more of those items.

The term 'comprising' is used herein to mean including the elements identified, but that such elements do not comprise an exclusive list and a device may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A device for exterminating ticks, comprising:
a heating element (11) configured to generate heated air;
a fan (13) operatively connected to the heating element (11) for directing the heated air towards an area infested with ticks; and
a temperature control unit (14) for regulating the temperature of the heated air to a threshold temperature sufficient to exterminate the ticks; **characterized by** comprising:
a housing (10) encompassing the heating element (11), fan (13), and
temperature control unit (14), wherein the housing (10) is portable and handheld.

2. The device according to claim 1, **characterized in that** the heating element (11) comprises an electric resistance heater.

3. The device according to claim 1 or claim 2, **characterized in that** the heating element (11) comprises a butane heater.

4. The device according to any of the claims 1-3, **characterized in that** the temperature control unit (14) includes a wireless temperature sensor (21) for maintaining the heated air at a predetermined threshold temperature.

5. The device according to any of the claims 1-4, **characterized in that** the predetermined threshold temperature ranges between 60°C and 70°C.

6. The device according to any of the claims 1-5, **characterized by** comprising a power source, wherein the power source is a rechargeable battery (16).

7. The device according to any of the claims 1-6, **characterized by** comprising a timer function (25) configured to indicate a period of time the device is operating in a single position or near the original position.

8. The device according to any of the claims 1-7, **characterized by** comprising an infrared thermometer (22) configured to measure temperature of the area infested with ticks and to provide feedback for temperature regulation.

9. The device according to any of the claims 1-8, **characterized by** comprising a thermal camera (23) configured to measure temperature of the area infested with ticks and to provide feedback for temperature regulation.

10. The device according to any of the claims 1-9, **characterized by** comprising a marking spray (28) connected to the housing (10), for marking said area.

11. A method for using a device for exterminating ticks, comprising:
heating air by a heating element (11);
directing the heated air towards an area infested with ticks by a fan (13) operatively connected to the heating element (11); and
regulating the temperature of the heated air to a threshold temperature sufficient to exterminate the ticks by a temperature control unit (14) for;
**characterized by** comprising:
a housing (10) encompassing the heating element (11), fan (13), and
temperature control unit (14), wherein the housing (10) is portable and handheld.

12. The method according to claim 11, **characterized in that** the predetermined threshold temperature ranges between 60°C and 70°C.

13. The method according to claims 11 or claim 12, **characterized by** measuring temperature of the area infested with ticks by a wireless temperature sensor (21) for maintaining the heated air above a predetermined threshold temperature.

14. The method according to any of the claims 11 - 13, **characterized by** measuring temperature of the area infested with ticks and providing feedback for temperature regulation by an infrared thermometer (22) or a thermal camera (23).

15. The method according to any of the claims 11 - 14, **characterized by** marking said area by a marking spray (28) connected to the device.
